# EUROPÄISCHE PATENTANMELDUNG

(11) **EP 1 336 765 A2**
(43) Veröffentlichungstag der Anmeldung: **20.08.2003**
(21) Anmeldenummer: 02027870.1
(22) Anmeldetag: 13.12.2002
(51) Int. Cl.: F16C 29/00, F16C 29/04

(54) **Verstell- bzw. Schienensystem von Fahzeugsitzen, Schubladen, Auszügen für Werkstattwagen oder dergleichen**

(30) Priorität: 13.02.2002 DE 10206075
(71) Anmelder: Westfalia Profiltechnik GmbH & Co. KG, 57271 Hilchenbach (DE)
(72) Erfinder: Thomas, Rüdiger, 35708 Haiger (DE); Müller, Torsten, 57271 Hilchenbach (DE)
(74) Vertreter: Valentin, Ekkehard

(57) **Zusammenfassung**

Bei einem Verstellsystem von Fahrzeugsitzen, Schubladen, Auszügen für Werkstattwagen oder dergleichen, umfassend parallel voneinander beabstandete Schienenanordnungen, bestehend jeweils aus einer Ober- und einer Unterschiene, (1 a, 1 b) von denen die bewegliche Oberschiene (1 b) auf zwischen Laufflächen der beiden profilierten Schienen vorgesehenen Kugeln (12) läuft, sind die Ober- und die Unterschiene (1 a, 1 b) mit derselben Geometrie ausgebildet und beim Verbau spiegelverkehrt unter Einschluß der Kugeln (12) ineinandergesetzt.

## Beschreibung

Die Erfindung betrifft ein Verstellsystem von Fahrzeugsitzen, Schubladen, Auszügen für Werkstattwagen oder dergleichen, umfassend parallel voneinander beabstandete Schienenanordnungen, bestehend jeweils aus einer Ober- und einer Unterschiene, von denen die bewegliche Oberschiene auf zwischen Laufflächen der beiden profilierten Schienen vorgesehenen Kugeln läuft.

Durch die EP 1 110 482 A1 ist ein Führungs- und Laufsystem einer Schublade bekanntgeworden, die in einer Schienenanordnung auf Kugeln laufend einschiebund ausziehbar ist. Es sind in entsprechend der Schubladenbreite parallel voneinander beabstandeten, mit den Kugeln versehenen Festschienen komplementäre, die Schublade tragenden Innenschienen angeordnet, die den Kugeln mit ebenen, geraden Laufflächen anliegen. Die Kugeln, die beim Einbau in Käfigen in definierter Position in dem Festschienenprofil angeordnet sind, machen den halben Verfahrweg mit und treffen dann auf Endanschläge.

Dieses bekannte Schienensystem erfordert ebenso wie Schienensysteme, die in der Automobilindustrie verwendet werden, wobei die Unterschiene im Fahrzeugboden befestigt wird und an der Oberschiene der Sitzaufbau installiert ist, unterschiedliche Profilgeometrien für Unter- und Oberschiene. Das gilt gleichermaßen für Schienensysteme, die für andere Anwendungsfälle verwendet werden, wo es darum geht, Komponenten verschiebbar zu lagern, z.B. Schubladen für LKW, Auszüge für Werkstattwagen, Unterbodenauszüge im PKW-/Kombi-Bereich, Schubladen in der Möbelindustrie etc.. Die unterschiedlichen Profile bereiten einen hohen Fertigungsaufwand und setzen angepaßte Rollensätze, d.h. für das jeweilige Profil geeignete Umformwerkzeuge voraus.

Der Erfindung liegt daher die Aufgabe zugrunde, ein Verstell- bzw. Schienensystem der eingangs genannten Art zu schaffen, das sich einfach herstellen und variabel einsetzen läßt.

Diese Aufgabe wird erfindungsgemäß dadurch gelöst, daß die Ober- und die Unterschiene mit derselben Geometrie ausgebildet und die beiden Schienen beim Verbau spiegelverkehrt unter Einschluß der Kugeln ineinandergesetzt sind. Es wird somit durch die umgekehrte Paarung der Schienen eine Führungseinheit mit Gleichheit der Bauteile ermöglicht. Der nur noch eine Profilquerschnitt für die beiden Schienen ermöglicht bei der Herstellung das Profilieren der Schienen mit nur einem Rollen- bzw. Werkzeugsatz. Der Verschiebeweg ist hierbei durch die Herstellung von unterschiedlichen Schienenlängen variabel, wobei das Verstellsystem bedingt durch den Einsatz von Stahlkugeln zudem nur geringe Verschiebekräfte erfordert.

Eine bevorzugte Ausführung der Erfindung sieht vor, daß jede Schiene einen horizontalen Steg mit an dessen Enden in der gleichen Richtung abgewinkelten, unterschiedlich langen Schenkeln besitzt, die voneinander abweichend profiliert sind. Es liegt damit für beide Schienen ein ungleichschenkliges, assymetrisches Ausgangsprofil vor, deren Paarung dann aber die an jedem Profil unterschiedlich profilierten Schenkel ermöglichen, weil sich in der verbauten Gebrauchslage zueinander passende Schenkel- bzw. Profilpaarungen ergeben. Der gegenüber dem einen Schenkel des jeweiligen Profils schwanenhalsartig hochstehende zweite Schenkel ermöglicht in der Gebrauchslage mit spiegelverkehrtem Einbau der beiden Schienen ein insgesamt hohes, kastenartiges Profil mit gutem Biegewiderstand. Das ist insbesondere dann wichtig, wenn die erfindungsgemäßen Schienenprofile als Verstellsystem von Fahrzeugsitzen verwendet werden. Denn es ist dann ein ausreichender Abstand zwischen den Schienen vorhanden, der auch im Crashfall noch ein Auseinanderziehen bzw. -schälen der Schienenprofile ermöglicht.

Die Paarung der beiden gleichen Profile wird begünstigt, wenn nach einer bevorzugten Ausführung der Erfindung der eine, weniger lange Schenkel als ein nach innen abgekantetes, im Querschnitt im wesentlichen U-förmiges, zum horizontalen Steg hin offenes Kopfprofil ausgebildet ist, dessen innerer Flansch kürzer als der über einen Schrägabschnitt an den horizontalen Steg angebundene äußere Flansch ist, und der lange Schenkel an seinem freien Ende mit einem nach außen abgekanteten Hakenprofil ausgebildet ist. Die gleichgerichtet abgekanteten bzw. als U-Kopfprofil bzw. Hakenprofil ausgebildeten Schenkel ermöglichen in der verbauten Gebrauchslage eine miteinander verklammerte, geschlossene Hohlkammer-Profilanordnung, die einen großen Biegewiderstand bietet.

Der seitlich nach außen von dem horizontalen Steg abgewinkelte Schrägabschnitt schafft hierbei den Freiraum zur Konfiguration des U-förmigen Schenkel-Kopfprofils, das sich mit seinem inneren, aufrecht stehenden Flansch in etwa in Richtung auf den Abknickpunkt des horizontalen Steges von dem Schrägabschnitt erstreckt. Bei Variationen der Länge des Schrägschnitts läßt sich außerdem der Bauraum der Schienenkombination beeinflussen.

Nach Ausgestaltungen der Erfindung kann das alternativ einen S-förmigen, zwei gegensinnige Rundungsradien besitzende Hakenprofil auch einen Endsteg mit nur einem Rundungsradius aufweisen. Ein optionaler flacher Endsteg benötigt keinen weiteren Bearbeitungsvorgang und bietet den ansonsten in den Abkant- bzw. Rundungsradien des U-förmigen Kopfprofils angeordneten Kugeln eine ebene, gerade Lauffläche, während bei der S-förmigen Kontur des Endsteges die Kugeln diametral gegenüberliegend in Abrundungsradien einerseits des U-förmigen Kopfprofils und andererseits des Endsteges laufen.

In einer vorteilhaften Ausführung der erfindungsgemäßen Schienenprofile taucht in der spiegelverkehrt verbauten Gebrauchslage die Unterschiene mit ihrem Hakenprofil in das U-förmige Kopfprofil der Oberschiene und deren Hakenprofil in das U-förmige Kopfprofil der Unterschiene ein, wobei die Endstege der Hakenprofile den Kammerhohlraum der Kopfprofile unterteilen, in deren Teilräumen in zueinander diagonaler Anordnung die Kugeln untergebracht sind. Der Verbau der die gleiche Geometrie aufweisenden Schienenprofile erfordert es somit lediglich, jeweils ein Hakenprofil der einen Schiene in das U-förmige Kopfprofil der anderen Schiene einzufügen. Die Laufkugeln zur Verschiebung der beweglichen Oberschiene befinden sich eingekammert in den von den Endstegen unterteilten Teilräumen der Kopfprofile.

Wenn in einem der durch die Endstege unterteilten Kopfprofile nach einem weiteren Vorschlag der Erfindung nur eine Kugel angeordnet ist, läßt sich ein weniger eingegrenztes Drei-Punktsystem erreichen, das einen Ausgleich von Fertigungstoleranzen ermöglicht.

Weitere Einzelheiten und Merkmale der Erfindung ergeben sich aus den Ansprüchen und der nachfolgenden Beschreibung von in den Zeichnungen dargestellten Ausführungsbeispielen der Erfindung. Es zeigen:
- Fig. 1: als Einzelheit in der Gesamtansicht ein erstes Schienenprofil;
- Fig. 2: als Einzelheit in einer Gesamtansicht ein zweites Schienenprofil, das die gleiche Geometrie wie das nach der Fig. 1 aufweist, demgegenüber aber spiegelverkehrt, d.h. in der Zeichnungsebene um 180° nach links gedreht dargestellt ist;
- Fig. 3: in der Gesamtansicht die verbaute Gebrauchs- bzw. Einbaulage der beiden Schienenprofile nach den Fig. 1 und 2;
- Fig. 4: eine der Einbaulage nach Fig. 3 entsprechende Schienenanordnung mit demgegenüber ohne Krümmung ausgebildetem Endsteg der Hakenprofile an den hochstehenden Schenkeln der Schienen; und
- Fig. 5: eine Darstellung wie gemäß Fig. 4 mit demgegenüber Endstegen, die mit einem Abrundungsradius versehen sind.

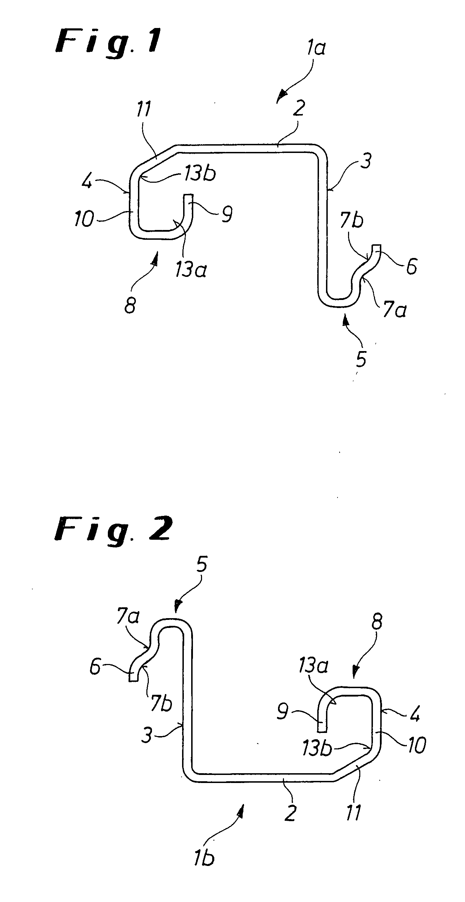

In den Fig. 1 und 2 sind als Ober- und Unterschiene zum Einsatz kommende Schienenprofile 1a und 1b dargestellt, die dieselbe Geometrie aufweisen. Jedes Schienenprofile 1a bzw. 1b besitzt einen horizontalen Steg 2 mit an dessen Enden gleichsinnig abgewinkelten Schenkeln 3 bzw. 4, die voneinander abweichend profiliert sind. Der längere, schwanenartig hochstehende Schenkel 3 ist an seinem Ende als Hakenprofil 5 ausgebildet, dessen Endsteg 6 S-förmig geschlungen und mit zwei Rundungsradien 7a, 7b ausgebildet ist. Der andere Schenkel 4 ist als ein im Querschnitt U-förmiges, zum horizontalen Steg 2 hin offenes Kopfprofil 8 ausgebildet, dessen innerer, zum Abknickpunkt von dem horizontalen Steg 2 hin ausgerichteter Flansch 9 kürzer ist als sein äußerer Flansch 10, der über einen Schrägabschnitt 11 mit dem horizontalen Steg 2 verbunden ist.

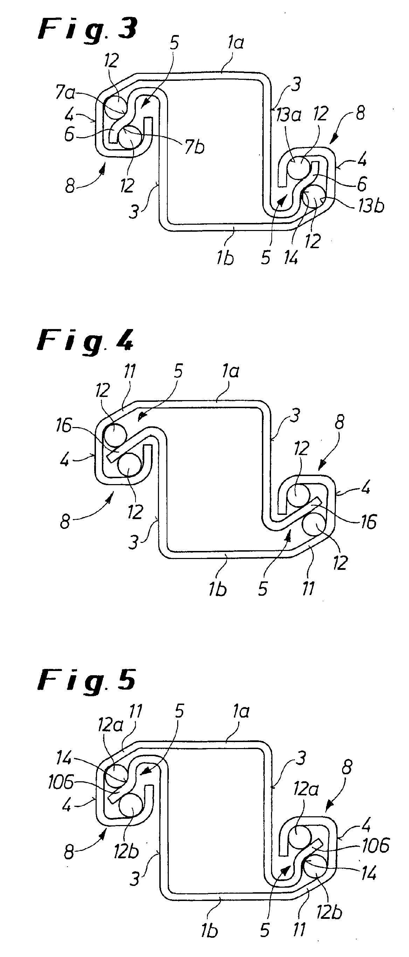

Die beiden Schienenprofile 1a, 1b werden zur Verwendung als Verstell- bzw. Laufsystem von z.B. Fahrzeugsitzen oder Schubladen spiegelverkehrt (entsprechend den Darstellungen in den Fig. 1 und 2) unter Einschluß von Kugeln 12 verbaut, die gemäß der Ausführung nach Fig. 3 in diagonaler Anordnung einerseits in Abrundungsradien 7a bzw. 7b der Endstege 6 der Hakenprofile 5 und andererseits der Rundungsradien 13a und 13b (vgl. Fig. 1 und 2) der U-förmigen Kopfprofile 8 laufen. Das an einem Untergrund, z.B. Fahrzeugboden eines PKW, angeordnete Schienenprofil 1b stellt hierbei die feste Unterschiene und das komplementäre Schienenprofil 1a die bewegliche Oberschiene des Laufsystems dar. Insgesamt ergibt sich damit eine Schienenanordnung mit einem großen Biegewiderstand.

Das gilt gleichermaßen für die Paarung der Schienenprofile 1a und 1b nach den Fig. 4 und 5, in denen gegenüber der vorbeschriebenen Ausführung lediglich die Endstege 16 bzw. 106 der Hakenprofile 5 anders gestaltet sind. Nach Fig. 4 handelt es sich bei ebenso wie gemäß der Ausführung nach Fig. 5 wiederum spiegelverkehrtem Verbau der beiden Schienenprofile 1a bzw. 1b um einen flachen Endsteg 16, während der Endsteg 106 der Schienenprofile 1a bzw. 1b nach Fig. 5 mit nur einem Rundungsradius 14 ausgebildet ist. Der flache Endsteg 16 bietet den Kugeln 12 eine ebene, flächige Lauffläche, während bei der Ausführung nach Fig. 5 die an beiden Seiten der spiegelverkehrt ineinandergeschachtelten Schienenprofile 1a bzw. 1b jeweils obere Kugel 12a einerseits zwischen dem Rundungsradius 13b des U-förmigen Kopfprofils 6 und dem Rundungsradius 14 des Endsteges 106 und andererseits dem Rundungsradius 14 und dem flachen Abschnitt des Endsteges 106 läuft; die unteren Kugeln 12b sind entsprechend komplementär geführt. Wenn abweichend von den Darstellungen nach den Fig. 3 bis 5 z.B. die untere Kugel 12b am linken Ende der spiegelverkehrt ineinandergebauten Anordnung der Schienenprofile 1a bzw. 1b entfällt, ergibt sich ein weniger eingegrenztes Drei-Punkt-Führungssystem, das einen Ausgleich von Fertigungstoleranzen erlaubt.

Der spiegelverkehrte Verbau von ansonsten die gleiche Geometrie besitzenden Schienenprofilen 1a bzw. 1b ermöglicht wegen der Paarung von komplementären, gleichwohl unterschiedlich profilierten Schenkelenden stets ein hohlkammerartiges, einen hohen Biegewiderstand besitzendes Schienen-Verstellsystem von Fahrzeugsitzen, Schubladen oder dergleichen. Da für die Unter- und die Oberschiene Profile mit derselben Geometrie zum Einsatz kommen, bedarf es zur Herstellung der benötigten Schienenprofile nur eines Werkzeugsatzes.

## Patentansprüche

1. Verstellsystem von Fahrzeugsitzen, Schubladen, Auszügen für Werkstattwagen oder dergleichen, umfassend parallel voneinander beabstandete Schienenanordnungen, bestehend jeweils aus einer Ober- und einer Unterschiene, von denen die bewegliche Oberschiene auf zwischen Laufflächen der beiden profilierten Schienen vorgesehenen Kugeln läuft,
**dadurch gekennzeichnet,**
**daß** die Ober- und Unterschiene (1a bzw. 1b) mit derselben Geometrie ausgebildet und beim Verbau spiegelverkehrt unter Einschluß der Kugeln (12; 12a, 12b) ineinandergesetzt sind.

2. Verstellsystem nach Anspruch 1,
**dadurch gekennzeichnet,**
**daß** jede Schiene (1a, 1b) einen horizontalen Steg (2) mit an dessen Enden in der gleichen Richtung abgewinkelten, unterschiedlich langen Schenkeln (3, 4) besitzt, die voneinander abweichend profiliert sind.

3. Verstellsystem nach Anspruch 2,
**dadurch gekennzeichnet.**
**daß** der eine, weniger lange Schenkel (4) als ein nach innen abgekantetes, im Querschnitt im wesentlichen U-förmiges, zum horizontalen Steg (2) offenes Kopfprofil (8) ausgebildet ist, dessen innerer Flansch (9) kürzer als der über einen Schrägabschnitt (11) an den horizontalen Steg (2) angebundene äußere Flansch (10) ist, und der lange Schenkel (3) an seinem freien Ende mit einem nach außen abgekanteten Hakenprofil (5) ausgebildet ist.

4. Verstellsystem nach Anspruch 3,
**dadurch gekennzeichnet,**
**daß** das Hakenprofil (5) einen flachen Endsteg (16) aufweist.

5. Verstellsystem nach Anspruch 3,
**dadurch gekennzeichnet,**
**daß** das Hakenprofil (5) einen S-förmigen, zwei gegensinnige Rundungsradien (7a, 7b) besitzenden Endsteg (6) aufweist.

6. Verstellsystem nach Anspruch 3,
**dadurch gekennzeichnet,**
**daß** das Hakenprofil (5) einen mit einem Rundungsradius (14) ausgebildeten Endsteg (106) aufweist.

7. Verstellsystem nach einem der Ansprüche 1 bis 6,
**dadurch gekennzeichnet,**
**daß** in der spiegelverkehrt verbauten Gebrauchslage die Unterschiene (1b) mit ihrem Hakenprofil (5) in das U-förmige Kopfprofil (8) der Oberschiene (1a) und deren Hakenprofil (5) in das U-förmige Kopfprofil (8) der Unterschiene (1b) eintaucht, wobei die Endstege (6; 16; 106) den Kammerhohlraum der Kopfprofile (8) unterteilen und in deren Teilräumen in zueinander diagonaler Anordnung die Kugeln (12; 12a, 12b) untergebracht sind.

8. Verstellsystem nach Anspruch 7,
**dadurch gekennzeichnet,**
**daß** in einem der durch die Endstege (6; 16; 106) unterteilten Kopfprofile (8) nur eine Kugel (12a) angeordnet ist.
